# EUROPÄISCHE PATENTANMELDUNG

(11) **EP 4 371 690 A1**
(43) Veröffentlichungstag der Anmeldung: **22.05.2024**
(21) Anmeldenummer: 23210193.1
(22) Anmeldetag: 15.11.2023
(51) Int. Cl.: B23K 15/00, B23K 15/04, B23K 26/282, B23K 33/00, B60B 35/02, F16C 3/02, B60B 35/08, B60B 17/00, B23K 101/00, B23K 103/04

(54) **EISENBAHNWELLE**

(30) Priorität: 16.11.2022 EP 22207905
(71) Anmelder: Fimbinger, Johann, 8401 Kalsdorf (AT)
(72) Erfinder: FIMBINGER, Johann, 8401 Kalsdorf (AT); BONNS, Steffen, 8404 Kalsdorf (AT)
(74) Vertreter: Grättinger Möhring von Poschinger Patentanwälte Partnerschaft mbB

(57) **Zusammenfassung**

Die Erfindung betrifft eine Eisenbahnwelle, insbesondere als Laufachse oder Triebachse in Leichtbauweise und ein Herstellungsverfahren dazu. Die Eisenbahnwelle ist mehrteilig durch Fügen ausgebildet, wobei die Fügeteile ein dünnwandig gezogenes Rohrteil (1) mit an beiden Enden angeschweißten Achszapfen (2) umfassen und zumindest auf ihrer inneren Oberfläche vor dem Fügen fertig bearbeitet sind, und wobei die Raumform für den Schweißkörper (3) der Schweißnaht in radialer Richtung des Rohrteils (1) in der Fügezone (4) durch einen umlaufenden Zentrierbund (5) des zugeordneten Achszapfens (2) begrenzt ist, welcher als axial vorspringender Ring zur Aufnahme des zugewandten Rohrendes (8) des Rohrteils (1) ausgebildet ist.

## Beschreibung

Die Erfindung betrifft eine Eisenbahnwelle, insbesondere als Laufachse oder Triebachse in Leichtbauweise, welche mehrteilig durch Fügen ausgebildet ist.

Sie betrifft ferner ein Herstellungsverfahren dazu, sowie einen ergänzenden Verfahrensschritt zu deren Weiterverarbeitung.

Eisenbahnwellen sind üblicherweise einschließlich der Achszapfen einstückig aus einem Vergütungsstahl mit geringem Kohlenstoffgehalt gefertigt, wobei sie eine durchgehende axiale Längsbohrung für eine turnusmäßig durchzuführende Ultraschall-Rissprüfung aufweisen.

Ferner wurden auf dem Gebiet des Automobilbaus Herstellungsverfahren zum rissfreien Fügen von Bauteilen aus härtbaren Stählen entwickelt (vgl. BOESE, U.: Das Verhalten der Stähle beim Schweißen, Teil I: Grundlagen, in Fachbuchreihe Schweißtechnik Band 44/1, DVS-Verlag Düsseldorf 1995). Dabei handelt es sich um Bauteile des Antriebsstrangs von Automobilen wie Antriebswellen, Getriebewellen und dergleichen, die aus mehreren Bauteilen aus härtbaren Stählen durch Fügen und induktiv unterstütztes Laserstrahlschweißen miteinander prozesssicher verbunden sind. Durch diese moderne Verbindungstechnik wird nicht nur eine erhebliche Reduzierung der Eigenmasse derartiger Bauteile erreicht, insbesondere wird das rissfreie Verschweißen eines unlegierten, niedriglegierten bzw. legierten Stahls mit einem Baustahl oder einem artgleichen oder anderen Vergütungsstahl, bei Vermeidung von hohen Eigenspannungen und schroffen Härte- und Gefügegrade ermöglicht.

Das rissfreie Strahlschweißen von Maschinenbauteilen aus härtbaren Stählen erfolgt, wie in DE 19637465 C1 beschrieben, vorteilhaft mit Hilfe einer Kurzzeitwärmebehandlung, derart, dass die kritische Abschreckgeschwindigkeit, die sonst zur Bildung von Martensit und damit zu unerwünschter Härtung führt, nicht erreicht wird.

Zum Einsatz des Laserstrahlschweißens bei der Fertigung von Eisenbahnwellen in Leichtbauweise, wobei ein dünnwandig gezogenes Stahlrohr mit Achszapfen der Radscheiben ein Fügeteil bilden, wird auf die Patentschriften GB 2073118 A und DE 102018001449 A1, ferner auf DE 10 2017 008493 und WO 98/10884 A1 verwiesen, welche typische Probleme des Stahlschweißverfahrens zum Verbinden von Hohlwellen mit hochdrehenden Rotorteilen aufzeigen.

Demgegenüber liegt der vorliegenden Erfindung die Aufgabe zugrunde, bei der Herstellung von Eisenbahnwellen in Leichtbauweise die Schweißverbindung der einzelnen durch Fügen zusammengesetzten Bauteile unter Vermeidung von Rissbildung und unregelmäßigen Oberflächenbereichen der zusammengesetzten Bauteile im Bereich der Schweißnähte zu gewährleisten und dabei gleichzeitig den Fertigungsaufwand hinsichtlich Form und Materialwahl der Fügeteile sowie den damit verbundenen Aufwand an Energie zu reduzieren.

Vorgenannte Aufgabe wird erfindungsgemäß mit den in Patentanspruch 1 genannten Merkmalen und weiteren Ausgestaltungen nach den Ansprüchen 2 bis 6 gelöst.

Ergänzend wird mittels eines erfindungsgemäßen Herstellungsverfahrens gemäß den Verfahrensansprüchen 7 bis 10 eine erhöhte Dauerschwingfestigkeit der durch Fügen und Strahlschweißen verbundenen Fügeteile erzielt.

Besonders vorteilhaft ist erfindungsgemäß die Ausbildung der Raumform für den Schweißkörper in radialer Richtung des Rohrteils (1) im Fügebereich, indem dort das Rohrteilende (8) jeweils auf einen umlaufenden Zentrierbund (5) des zugeordneten Achszapfens (2) geschoben wird, der die radiale Ausdehnung des Schweißkörpers nach innen begrenzt, wobei sich der Schweißkörper (3) geringfügig über die Wand des Rohrteilendes (8) hinaus in den Zentrierbund (5) des Achszapfens (2) hineinerstreckt. Dieser Zentrierbund (5) in Form eines axial vorspringenden Rings dient zunächst bei der Aufnahme des zugewandten Rohrteilendes als Fügeposition. Insbesondere wird durch den Zentrierbund (5) sichergestellt, dass eine Ausformung der Schweißnaht in das Rohrteilinnere zuverlässig unterbleibt.

Eine weitere Verbesserung nach dem erfindungsgemäßen Herstellungsverfahren besteht im Wesentlichen durch Verbinden eines dünnwandigen Rohrteils (1) mit Achszapfen (2) von zugeordneten Radscheiben (10) durch Fügen der beiden Rohrenden (8) des Rohrteils (1) mit einem axial vorspringenden Zentrierbund (5) des jeweils zugeordneten Achszapfens (2) und nach dem Fügen durch Herstellen einer Schweißverbindung zwischen Rohrteil (1) und den Achszapfen (2) im Strahlschweißverfahren, derart, dass sich der Schweißkörper (3) der Schweißnaht geringfügig in den Zentrierbund (5) des jeweiligen Achszapfens (2) hineinerstreckt.

Nach dem Erkalten der Schweißnaht wird das Rohrteil (1) von innen wenigstens im Bereich der Fügezone (4) durch spanabhebende Bearbeitung mittels eines rotierenden Werkzeugs ausgedreht.

Das Ausdrehen des Rohrteils (1) erfolgt vorteilhaft in radialer Richtung maximal bis zu einem Durchmesser, der dem Innendurchmesser des Rohrteils (1) entspricht und in axialer Richtung über die Fügezone (4) hinaus bis ganz oder teilweise innerhalb des zugeordneten Achszapfens (2).

Nach einer besonders vorteilhaften Variante des erfindungsgemäßen Verfahrens ist vorgesehen, dass das Ausdrehen radial einschließlich des Zentrierbunds (5) mindestens bis zu einem Durchmesser erfolgt, der dem Innendurchmesser des Rohrteils (1) entspricht und in axialer Richtung maximal bis zur radscheibenseitigen Stirnfläche (12) des jeweiligen Achszapfens (2) erfolgt.

Um einen stufenlosen Übergang des ausgedrehten Innendurchmessers zu gewährleisten, kann das Ausdrehen vorteilhaft so erfolgen, dass der Innendurchmesser des Rohrteils (1) wenigstens im Bereich der Fügezone (4) leicht überschritten wird.

Durch diese Maßnahmen, einschließlich des Wegarbeitens des Zentrierbunds (5) mit der Nahtwurzel der Schweißnaht, in radialer Richtung bis zum Innendurchmesser des Rohrteils (1) werden nachteilige Kerbwirkungen und inhomogene Schwingungsableitungen als Folge der hohen Belastungen im Eisenbahnbetrieb weitgehend vermieden. Damit einhergehend ergibt sich eine spürbare Verbesserung der Dauerschwingfestigkeit der Fügeverbindung.

In weiterer Ausgestaltung der Erfindung kommt als Rohrteil (1) vorteilhaft ein durch Ziehen hergestelltes Präzisionsrohr in Frage, bevorzugt aus einem höherfesten Baustahl wie S690 oder auch aus einem zum Achszapfen artgleichen Vergütungsstahl.

Die Achszapfen können vorteilhaft aus geschmiedeten Rohlingen aus Vergütungsstahl mit geringerem Kohlenstoffgehalt, bevorzugt 25CrMo4 hergestellt sein. Geeignete Varianten sind beispielsweise 34CrNiMo6 oder 42CrMo4. Auch ein höherfester Baustahl ist geeignet.

Im Rahmen des Lösungsgedankens wird entsprechend der Merkmalskombination nach Patentanspruch 1 die angestrebte effiziente Herstellung von Eisenbahnwellen in großindustriellem Maßstab gefördert. Durch den Einsatz von Rohrteilen (1) aus marktüblichen dünnwandigen Rohren, welche mit weiteren Fügebauteilen im Strahlschweißverfahren verbunden sind, wird eine neuartige, besonders wirtschaftliche Konstruktion einer Leichtbaueisenbahnwelle geschaffen.

Die bekannte Alternative der Reibschweißverbindung mit dabei erforderlicher Vorwärmung zur Vermeidung lokaler Härtung im Bereich der Fügezone sowie einer erforderlichen Nachbearbeitung von wulstförmigen Ausformungen der Schweißnaht kann somit vergleichsweise außer Betracht bleiben.

Die Erfindung wird im Folgenden anhand der Zeichnung mit den Figuren 1 bis 3 erläutert.

Die Figur 1 zeigt einen axialen Längsschnitt durch eine Leichtbaueisenbahnwelle im Bereich eines Rohrendes mit angeschlossenem Achszapfen, der Radscheibe und zugehörigem Lagerzapfen.

Figur 2 zeigt in vergrößerter Darstellung einen Halbschnitt durch den Achszapfen gemäß Fig. 1 und eine entsprechend vergrößerte Zone II der Fig. 1.

Figur 3 zeigt eine Variante zu Fig. 1.

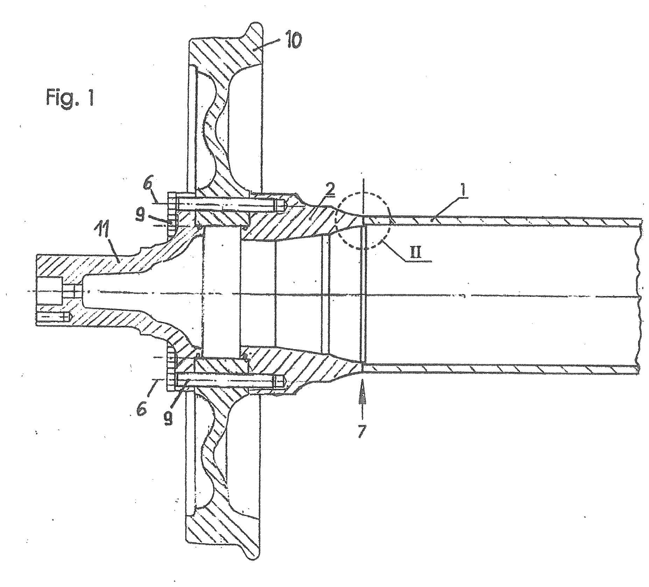

Figur 1 zeigt einen Abschnitt einer Eisenbahnwelle zwischen dem Ende eines die Welle bildenden Rohrteils (1), dessen Anschluss an den zugehörigen Achszapfen (2) sowie die zugehörige Radscheibe (10) mit Lagerzapfen (11). Im Achszapfen (2) sind mit strichpunktierten Linien die Mittelachsen (6) von umlaufend angeordneten Flanschschrauben (9) zur Befestigung der Radscheibe (10) eingezeichnet.

Bezogen auf die realen Größenverhältnisse sind beispielsweise eine Rohrteillänge von ca. 1030 mm, sowie eine Wandstärke des Rohrteils (1) von 12 mm bei einem Innendurchmesser des Rohrteils (1) von 262 mm anzusetzen.

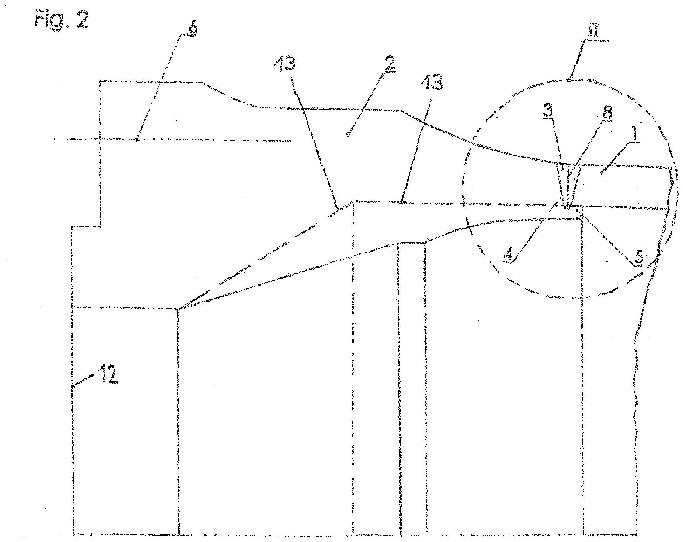

Die Laserschweißposition (7) gemäß Figur 1 zeigt auf die dort im Einzelnen nicht erkennbare Ausgestaltung der eigentlichen Fügezone (4), welche in Figur 2 etwa in realer Größe (Zone II) dargestellt ist. Innerhalb der Fügezone (4) befindet sich die Schmelzzone des späteren Schweißkörpers (3), welcher die Verbindung zwischen dem Rohrteilende (8) des Rohrteils (1) und dem zugewandten Ende des Achskörpers (2) darstellt.

Um die Enden beider Fügeteile für die Schweißverbindung entsprechend der Laserschweißposition (7) präzise zu positionieren, ist am Innenumfang des Achszapfens (2) ein axial vorspringender ringförmiger Zentrierbund (5) angeformt, auf welchem das zugeordnete Rohrteilende (8) zur genauen Positionierung der Fügeverbindung aufgesteckt wird, bevor die Laserschweißung beginnt. Das rohrinnere Ende des umlaufend gebildeten Schweißkörpers (3) durchdringt beide stumpf zueinander gestoßenen Fügeteile (1, 2), nämlich die Wand des Rohrteils (1) im Bereich des Rohrteilendes (8) vollständig und ragt geringfügig darüber hinaus in den Zentrierbund (5) des Achszapfens (2) hinein, ohne jedoch den Innenraum der gezeigten Eisenbahnwelle im Bereich der Fügezone (4) zu erreichen. Auf diese Weise wird sichergestellt, dass die Schmelzzone des Schweißkörpers (3) gleichmäßig an der Außenseite der Fügeverbindung endet, so dass dort ein im Wesentlichen bündiger Anschluss beider Fügeteile (1, 2) ohne Nachbearbeitung des Außenumfangs der Schweißnaht (3) erzielt werden kann.

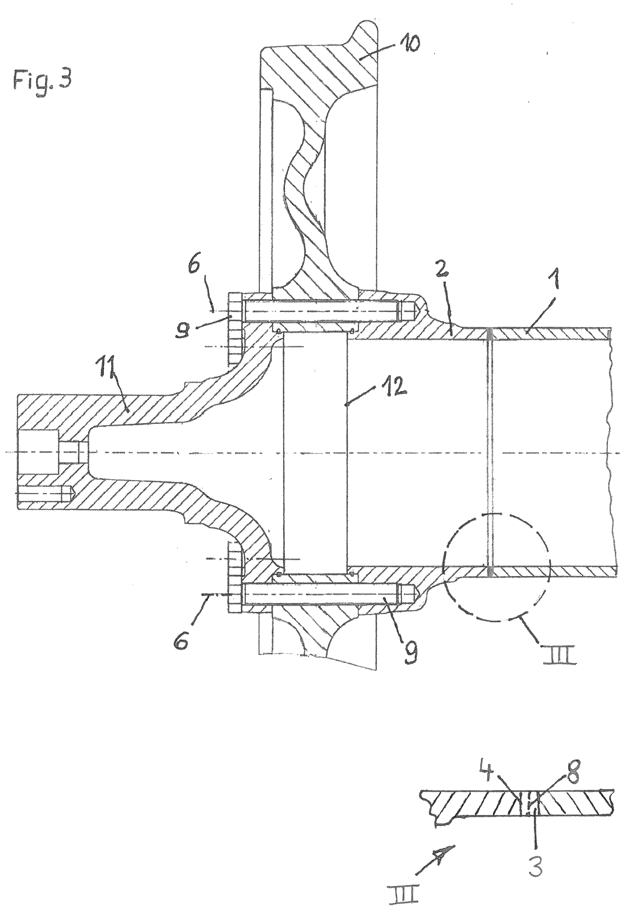

Eine Variante einer erfindungsgemäßen Eisenbahnwelle gemäß Fig. 1 ist in Fig. 3 dargestellt. Funktionsgleiche Bauteile beider Ausführungsformen sind mit gleichen Bezugszeichen versehen.

Gemäß Fig. 1 ist die Fügezone (4) zum Rohrinneren hin durch den Zentrierbund (5) abgeschlossen, also unter Ausbildung einer nach Innen geschlossenen Raumform.

Demgegenüber ist die Variante nach Fig. 3 zwar ebenfalls nach Innen geschlossen, besitzt aber eine glatt durchlaufende Fügezone (4), wie in der Vergrößerung gemäß Zone III dargestellt.

Eine gleichartig zu Fig. 1 hergestellte Laserstumpfschweißung wird dabei in einem nachfolgenden Bearbeitungsschritt durch Ausbohren des Innenumfangs des Rohrteils (1) geglättet, so dass eine bis zur Stirnseite (12) des Achszapfens (2) einschließlich der Fügezone (4) durchgehend geschlossene innere Oberfläche entsteht.

Durch das Wegarbeiten, z.B. durch Ausbohren des Innenumfangs des Rohrteils (1) nach dem Erstarren der Schweißnaht wird mit dieser auch der Zentrierbund (5) flächig weggearbeitet.

Durch dieses nachträgliche Wegarbeiten der Schweißnaht (3) und des Zentrierbunds (5) gelingt es Belastungsrisse als Folge von ungleichförmigen Steifigkeitsverläufen im Bereich der Schweißnaht (3) zu vermeiden.

Bezogen auf die Ausführungsform gemäß Fig. 1 kann das Ausbohren der beiden Fügeteile - Rohrteil (1) und Achszapfen (2) - beispielsweise nach einem Verlauf gemäß der gestrichelten Linie (13) in Fig. 2 erfolgen; auf diese Weise wird der Durchmessersprung nach Fig. 1 zwischen dem Innendurchmesser des Achszapfens (2) und jenem des Rohrteils (1) längs der Knicklinie (13) überbrückt.

## Patentansprüche

1. Eisenbahnwelle, insbesondere als Laufachse oder Triebachse in Leichtbauweise, welche mehrteilig durch Fügen ausgebildet ist, wobei die Fügeteile ein dünnwandig gezogenes Rohrteil (1) mit an beiden Enden angeschweißten Achszapfen (2) umfassen und zumindest auf ihrer inneren Oberfläche vor dem Fügen fertig bearbeitet sind, und wobei die Raumform für den Schweißkörper (3) der Schweißnaht in radialer Richtung des Rohrteils (1) in der Fügezone (4) durch einen umlaufenden Zentrierbund (5) des zugeordneten Achszapfens (2) begrenzt ist, welcher als axial vorspringender Ring zur Aufnahme des zugewandten Rohrendes (8) des Rohrteils (1) ausgebildet ist, **dadurch gekennzeichnet,**
**dass** die Schweißverbindung zwischen Rohrteil (1) und Achszapfen (2) im Strahlschweißverfahren hergestellt ist und
**dass** die fertige Schweißnaht innerhalb der Fügezone (4) eine nach Innen geschlossene Raumform ausbildet, wobei sich der Schweißkörper (3) der Schweißnaht geringfügig über die Wand des Rohrendes (8) des Rohrteils (1) hinaus in den Zentrierbund (5) des Achszapfens (2) hineinerstreckt.

2. Eisenbahnwelle nach Anspruch 1,
**dadurch gekennzeichnet,**
**dass** die Schweißverbindung durch Laserstrahlschweißen erzeugt ist.

3. Eisenbahnwelle nach Anspruch 1,
**dadurch gekennzeichnet,**
**dass** die Achszapfen (2) aus geschmiedeten Rohlingen aus Vergütungsstahl mit geringem Kohlenstoffgehalt oder einem höherfesten Baustahl hergestellt sind.

4. Eisenbahnwelle nach Anspruch 3,
**dadurch gekennzeichnet,**
**dass** als Vergütungsstahl für die Achszapfen (2) 25CrMo4 vorgesehen ist.

5. Eisenbahnwelle nach Anspruch 1,
**dadurch gekennzeichnet,**
**dass** das Rohrteil (1) als Präzisionsrohr durch Ziehen aus einem höherfesten Baustahl oder einem zum Achszapfen artgleichen Vergütungsstahl hergestellt ist.

6. Eisenbahnwelle nach Anspruch 5,
**dadurch gekennzeichnet,**
**dass** als Baustahl für das Rohrteil (1) S690 vorgesehen ist.

7. Verfahren zur Herstellung einer Eisenbahnwelle in Leichtbauweise durch Verbinden eines dünnwandigen Rohrteils (1) mit Achszapfen (2) von zugeordneten Radscheiben (10) durch
Fügen der beiden Rohrenden (8) des Rohrteils (1) mit einem axial vorspringenden Zentrierbund (5) des jeweils zugeordneten Achszapfens (2) und nach dem Fügen durch
Herstellen einer Schweißverbindung zwischen Rohrteil (1) und den Achszapfen (2) im Strahlschweißverfahren, derart, dass sich der Schweißkörper (3) der Schweißnaht geringfügig in den Zentrierbund (5) des jeweiligen Achszapfens (2) hineinerstreckt.

8. Verfahren nach Anspruch 7,
**dadurch gekennzeichnet,**
**dass** nach dem Erkalten der Schweißnaht das Rohrteil (1) von innen wenigstens im Bereich der Fügezone (4) durch spanabhebende Bearbeitung mittels eines rotierenden Werkzeugs ausgedreht wird.

9. Verfahren nach Anspruch 8,
**dadurch gekennzeichnet,**
**dass** das Ausdrehen in radialer Richtung maximal bis zum Innenumfang des Rohrteils (1) und in axialer Richtung über die Fügezone (4) hinaus bis ganz oder teilweise innerhalb des zugeordneten Achszapfens (2) erfolgt.

10. Verfahren nach Anspruch 8,
**dadurch gekennzeichnet,**
**dass** das Ausdrehen radial einschließlich des Zentrierbunds (5) mindestens bis zu einem Durchmesser erfolgt, der dem Innendurchmesser des Rohrteils (1) entspricht und in axialer Richtung maximal bis zur radscheibenseitigen Stirnfläche (12) des jeweiligen Achszapfens (2) erfolgt.
